(19) Europäisches Patentamt
European Patent Office
Office européen des brevets

(11) **EP 2 276 585 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **09745276.7**

(22) Anmeldetag: **11.05.2009**

(51) Int Cl.:
*B07C 5/342* (2006.01)     *B07C 5/12* (2006.01)
*G01N 21/86* (2006.01)     *G01N 21/958* (2006.01)
*G01N 21/84* (2006.01)

(86) Internationale Anmeldenummer:
**PCT/AT2009/000193**

(87) Internationale Veröffentlichungsnummer:
**WO 2009/137854 (19.11.2009 Gazette 2009/47)**

(54) **VERFAHREN ZUM OPTISCHEN DETEKTIEREN VON BEWEGTEN OBJEKTEN**

METHOD FOR OPTICALLY DETECTING MOVING OBJECTS

PROCEDE POUR LA DETECTION OPTIQUE D'OBJETS EN MOUVEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.05.2008 AT 7602008**

(43) Veröffentlichungstag der Anmeldung:
**26.01.2011 Patentblatt 2011/04**

(73) Patentinhaber: **EVK DI Kerschhaggl GmbH 8074 Raaba (AT)**

(72) Erfinder:
• **FRUEHWIRTH, Josef**
  **A-8010 Graz (AT)**
• **KULCKE, Axel**
  **A-8382 Weichselbaum (AT)**

(74) Vertreter: **Margotti, Herwig Franz Schwarz & Partner Patentanwälte Wipplingerstrasse 30 1010 Wien (AT)**

(56) Entgegenhaltungen:
EP-A1- 1 030 173     EP-A1- 1 742 041
DE-A1- 10 063 293     US-A- 6 137 074
US-B1- 7 019 822

## Beschreibung

Die Erfindung betrifft ein Verfahren zum optischen Detektieren von mit einer Fördergeschwindigkeit bewegten Objekten.

Die Detektion und anschließende Sortierung von Schüttgütern mit Farbkameras ist eine gängige Methode. Eine übliche Ausführungsvariante wird beispielsweise in dem Patent AT 410847 beschrieben. Diese Technologie wird insbesondere im Recyclingbereich eingesetzt. Überwiegend erfolgt dabei eine Durchlicht-Detektion und Sortierung, bei der Glas und transparente Kunststoffprodukte aufgearbeitet werden, indem Licht durch sie hindurchgestrahlt wird, das hindurch tretende Licht von der Farbkamera aufgefangen und analysiert wird. Bei dieser Technologie sind beispielsweise Etiketten an den transparenten Glas- und Kunststoffteilen ein großes Hindernis, so dass sogar aufwändige mechanische Methoden, siehe z.B. AT 503036 B1, in einer Vorstufe des Verfahrens zu ihrer Entfernung eingesetzt werden. Zur Verbesserung der Ausbeute ist es jedoch absolut wünschenswert, dass transparente Objekte erkannt werden, obwohl sie mit nicht-transparenten Fremdstoffen, wie Etiketten behaftet sind.

Weiterhin sind heutzutage auch Leuchtstoffröhren-Systeme oder LED-basierte Beleuchtungssysteme (z.B. im Gebrauchsmuster AT 004889U1 offenbart) im Einsatz. Die Fortschritte in der optischen Technologie bieten Farbkameras mit immer höheren Zeilenabtastraten, die aber wiederum immer kürze Belichtungszeiten und somit höhere Leuchtdichten zur Beleuchtung der zu detektierenden Objekte erfordert. Die erforderlichen hohen Leuchtdichten für Systeme mit 4-20 kHz Zeilenabtastraten, welche bereits Stand der Technik sind oder in naher Zukunft verfügbar sein werden, können mit Leuchtstoffröhren oder thermischen Leuchtmitteln nicht mehr erreicht werden. Es wurde daher bereits vorgeschlagen, zur Erhöhung der Leuchtdichte Systeme mit Leuchtdioden (LEDs) als Leuchtmittel auszurüsten. Als Standard auf diesem Gebiet haben sich strahlbündelnde Optiken in Kombination mit Weißlichterzeugung mittels blauer LEDs mit gelben Fluoreszenzfarbstoffen (so genannte Weißlicht-LEDs) etabliert. Aufgrund der ineffizienten Farbkonversion erfordert diese Art der Beleuchtung aber eine aktive Kühlung, welche zum Beispiel aufwändig mit Wasserkühlungen bewerkstelligt wird.

US7019822-B1 offenbart ein speziell auf die Papiersortierung angepasstes Sortiersystem, das Hochgeschwindigkeitsbestimmung von Farbe, Glanz und Druckschriften in einem Altpapierstrom ermöglicht. Die Sortiergeschwindigkeit ist sehr hoch. Auch die Abfolge an Lichtblitzen mit unterschiedlichen Farben ist extrem schnell. Diese Lichtblitzabfolge und Auslesung muss auch so schnell sein, denn jeder als Pixel definierter Zielbereich des Altpapierstroms muss von allen Lichtblitzen erfasst werden, um das propagierte "bracketing of colours"-Verfahren durchführen zu können.

Als Standardtechnologie in Verknüpfung mit Weißlichtbeleuchtung werden heute Farbkameras mit Farbfiltern auf den optisch sensitiven Elementen (Pixeln) oder 3-Chip Kameras eingesetzt, bei denen jeweils ein Chip für eine der drei Grundfarben Rot, Grün, Blau empfindlich ist. Weiterhin wird die Anforderung an die Auflösung und damit die Anzahl der Pixel immer größer. Standard sind heute bereits über 1000 Farbtripel und Entwicklungen gehen dahin, die Grenze um eine Größenordnung zu erhöhen. Dies erfordert die Pixelgröße weiter zu verkleinern, was wiederum die Anforderungen an die Leuchtdichte der Beleuchtungseinrichtungen weiter erhöht und auch die Qualität der ohnehin fragwürdigen Farbfilter zu vermindern. Bei den 3-Chip Kameras ist die notwendige optische Aufspaltung der Lichtwege zur Separation der Farbkomponenten und die Justierung der Sensoren zueinander als kritisch zu beurteilen.

Es besteht daher nach wie vor das Bedürfnis nach einem verbesserten Verfahren zum optischen Detektieren von bewegten Objekten, das hohe Erkennungsqualität bei hohen Fördergeschwindigkeiten der zu detektierenden Objekte bietet, dabei aber mit Beleuchtungseinrichtungen mit vergleichsweise geringen Leuchtdichten das Auslangen findet.

Der vorliegenden Erfindung liegt die Aufgabe zugrunde ein Verfahren zum optischen Detektieren von bewegten Objekten bereitzustellen, das die oben erläuterten Nachteile des Standes der Technik überwindet.

Diese Aufgabe wird durch ein Verfahren zum optischen Detektieren von bewegten Objekten mit den kennzeichnenden Merkmalen des Anspruchs 1 gelöst. Weitere Vorteile und Merkmale der vorliegenden Erfindung ergeben sich aus den Unteransprüchen und der nachfolgenden Beschreibung.

Gemäß der Erfindung wird ein reiner Monochromsensor ohne vorgeschaltete optische Filter verwendet und das Objekt sequentiell mit einer Abfolge an Lichtpulsen mit vordefinierten Farben, z.B. Rot, Grün, Blau belichtet. Bei jedem Lichtpuls wird mit dem monochromen Flächensensor ein Bild des Objekts aufgenommen und zwischengespeichert. Für die Auswertung werden nur einige Zeilen eines jeden Bildes benötigt, was die zu verarbeitende Datenmenge gering hält. Diese erfindungsgemäße Ausführung hat den Vorteil, dass jede Farbkomponente direkt auf den Sensor gelangt und dort die Signale erzeugt. Im Gegensatz dazu sind bei der bekannten Verwendung einer Farbfilterkamera bei RGB-Belichtung die blauen und grünen Pixel für das rote Licht und die rote Signalkomponente ohne jede Bedeutung, da das Licht im Farbfilter sowieso absorbiert wird. Entsprechendes gilt für die anderen Farben. Geht man zusätzlich von den nicht idealen technischen Umsetzungen der Farbfilter bei sehr kleinen Pixelgrößen aus, welche nur ca. 50 % der Lichtquanten bis zum Sensor gelangen lassen, ergibt sich bei der Erfindung eine typischerweise auf ein Sechstel reduzierte erforderliche Leuchtdichte der Beleuchtung. Eine weitere deutliche Reduzierung der Lichtanforderung wird durch die Verwendung des zweidimensionalen Sensors erreicht, indem bei jedem Lichtpuls mehrere Zeilen belichtet werden und anschließend die Zeilen und Farbinformationen sequentiell zusammengesetzt werden.

Hohe Qualität der Objektdetektion und hohe Verarbeitungsgeschwindigkeit werden erzielt, wenn zur Beleuchtung schnell schaltende, schmalbandige bis monochromatische Lichtquellen, vorzugsweise Leuchtdioden oder Laser, verwendet werden. Zur sequentiellen Erzeugung von RGB-Bildern ist der Einsatz von roten (z.B. 630nm), grünen(z.B. 530nm) und blauen (z.B. 460nm) LEDs günstig. Diese LED-Typen werden typischerweise in AlGaInP und InGaN Technologie realisiert und benötigen keine Farbkonversionsschicht.. Dabei sind vorzugsweise die 3 LED-Typen in dichter Anordnung gemeinsam in einem Lichtquellen-Modul integriert. Auf diese Weise wird bei geringer Wärmeerzeugung eine hohe Leuchtdichte erreicht. Ein weiterer Vorteil besteht darin, dass dieses Licht mit den Farbfilterkurven üblicher Filterkameras übereinstimmt und somit eine qualitativ hochwertige Farbdarstellung gewährleistet ist. Die gegenüber dem Stand der Technik deutlich höhere Lichtleistung ermöglicht es ohne optische Bündelung zu arbeiten, was eine vorab diffusere Beleuchtung des Objekts ergibt.

Die vorliegende Erfindung eignet sich sowohl für die Auflicht- als auch die Durchlichtbeleuchtung. Mit Durchlichtbeleuchtung werden vor allem transparente oder semitransparente Objekte detektiert. Mit der Auflichtbeleuchtung können auch (teilweise) undurchsichtige Objekte detektiert werden.

Weiters ist die Erfindung sowohl für direkte Beleuchtungssysteme (Hellfeld) geeignet, die heutzutage meistens bei der Glassortierung verwendet werden, als auch für indirekte Beleuchtungssysteme (Dunkelfeld), bei denen das Objekt nicht direkt angestrahlt, sondern nur über Reflexionsflächen und Diffusoren diffus beleuchtet wird. Bei der Anwendung im Glassortierungsbereich hat man es mit Bruchobjekten zu tun, welche zum einen scharfe Bruchkanten in allen Ausrichtungen aufweisen, zum anderen häufig keine planparallelen Oberflächen, sondern linsenförmige Oberflächen haben. Weiterhin sind Pigmente in den Objekten vorhanden und die Oberflächen sind häufig mit Etiketten oder Verschmutzungen besetzt. In einer Hellfeld Beleuchtung erzeugen diese beschriebenen Eigenschaften große Probleme in der Bewertung der Objekte, so dass zumindest eine anteilige Dunkelfeldbeleuchtung günstig sein kann.

In einer Ausführungsform der Erfindung wird die Abfolge der Lichtimpulse so eingestellt, dass die Projektion des Objekts zwischen zwei Lichtimpulsen um genau einen zwischen den auszulesenden Zeilen bestehenden Zeilenabstand weiterwandert, wobei Zeilen aus den bei aufeinanderfolgender Beleuchtung mit unterschiedlichen Farben aufgenommenen Bildern zu den Farbzeilen sequentiell miteinander kombiniert werden, wobei die kombinierten Zeilen zueinander den genannten Zeilenabstand aufweisen.

In einer Fortbildung dieser Ausführungsform wird eine solche Anzahl an Zeilen aus den bei jedem Lichtpuls erzeugten Bildern ausgelesen und zwischengespeichert, die ein Vielfaches, zumindest jedoch das Doppelte der Anzahl an unterschiedlichen Farben der Lichtpulse beträgt. Werden beispielsweise Abfolgen an Lichtpulsen in den Farben Rot, Grün, Blau ausgestrahlt, so müssen mindestens sechs Zeilen pro Bild ausgelesen werden. Dann werden sequentiell jene Zeilen miteinander addiert, die bei gleichfarbiger Beleuchtung aufgenommen wurden und die denselben linearen Bereich des Objekts abbilden. Solcherart errechnete Zwischenzeilen jeder Beleuchtungsfarbe, die jeweils denselben linearen Bereich des Objekts abbilden, werden anschließend zu Farbzeilen zusammengesetzt und diese wiederum zu einem Gesamtbild des Objekts zusammengesetzt. Durch das Addieren der korrespondierenden Zeilen gleicher Farbe findet eine Signalverstärkung statt, die die notwendige Lichtstärke der Beleuchtung auf einen entsprechenden Bruchteil reduziert und damit zu verringerter Leistungsaufnahme und erhöhter Lebensdauer der Lichtquellen beiträgt

In einer alternativen Ausführungsform des erfindungsgemäßen Verfahrens wird die Abfolge der Lichtimpulse so eingestellt, dass die Projektion des Objekts zwischen zwei Lichtimpulsen um ein ganzzahliges Vielfaches, zumindest das Doppelte, des Zeilenabstandes zwischen den auszulesenden Zeilen weiterwandert, wobei Zeilen aus den bei Beleuchtung mit unterschiedlichen Farben aufgenommenen Bildern zu den Farbzeilen sequentiell miteinander kombiniert werden, wobei die kombinierten Zeilen zueinander das genannte Vielfache des Zeilenabstandes aufweisen. Diese Ausführungsform bietet gegenüber den oben erläuterten Ausführungsformen den Vorteil, dass die Frequenz der Lichtimpulse auf einen Bruchteil verringert werden kann, genauer gesagt, umgekehrt proportional zu jenem Vielfachen der Zeilenabstände ist, um das das Objekt zwischen zwei Lichtimpulsen weiterwandert. Um dennoch dieselbe Zeilenauflösung zu erreichen, wie bei den obigen Ausführungsformen, muss die Anzahl der auszulesenden Zeilen auf ein entsprechendes Vielfaches erhöht werden.

Ein weiterer, wesentlicher Vorteil der Erfindung besteht darin, dass es möglich ist, aus den Signalen der kombinierten Farbzeilen die Fördergeschwindigkeit der Objekte zu bestimmen und nachzuregeln oder das Zeilen-Ausleseverhalten anzupassen. Es hat sich nämlich gezeigt, dass bei der erfindungsgemäßen Detektion in der Darstellung der Objekte an deren Rändern eine deutliche Abfolge der Beleuchtungsfarben ersichtlich ist, die in Kombination miteinander aber einen Grauwert (ohne resultierenden Farbanteil) ergibt. Wenn sich jedoch ein resultierender Farbanteil einstellt, so lässt sich daraus schließen, dass die zeitliche Abfolge an Lichtpulsen bzw. der Zeilenabstand der ausgelesenen Zeilen nicht exakt mit der Fördergeschwindigkeit der Objekte übereinstimmt. Aus der resultierenden Farbe lässt sich weiters erkennen, ob die Fördergeschwindigkeit zu niedrig oder zu hoch ist und auch, um wie viel die Fördergeschwindigkeit vom Sollwert abweicht, der durch die Voreinstellung der Lichtpulsabfolge und des Zeilenabstands genau bekannt ist. Die Kenntnis über die Abweichung der Ist-Geschwindigkeit von der Soll-Fördergeschwindigkeit stellt prinzipiell eine Geschwindigkeitsmessung des Objekts dar, die für Sortieranlagen sehr wichtig ist, weil daraus genauer ermittelt werden kann, wann das Objekt an einer stromabwärts von der Detektionseinrichtung angeordneten Sortiereinrichtung eintreffen wird, als es bei bloßer Zugrundelegung der Sollgeschwindigkeit möglich ist. Weiters ist zu bedenken, dass die Geschwindigkeit in einem Objekt-Förderstrom durchaus nicht gleichförmig ist (z.B. verursacht durch unterschiedliche Reibung auf einer Förderrutsche) und durch die Kenntnis der Ist-Geschwindigkeit einzelner Objekte eine wesentlich erhöhte Treffsicherheit beim Sortieren der Objekte erzielt wird. Weiters kann die erfindungsgemäße Messung der Ist-Fördergeschwindigkeit zur Nachregelung einer Objekt-Fördereinrichtung an die Soll-Fördergeschwindigkeit verwendet werden. Eine weitere Anwendung der erfindungsgemäßen Messung der Ist-Fördergeschwindigkeit der Objekte besteht darin, den voreingestellten Zeilenabstand der ausgelesenen Zeilen nachzujustieren, bis im Gesamtbild des Objekts kein Farbanteil an den Objektkanten mehr ersichtlich ist. Man erspart sich durch dieses selbstjustierende System aufwändige Kalibrierungs- und Nachkalibrierungsarbeiten.

Die Erfindung wird nun anhand eines nicht einschränkenden Ausführungsbeispiels unter Bezugnahme auf die Zeichnungen näher erläutert.

In den Zeichnungen zeigen:

Fig. 1 ein schematisches Blockschaltbild eines erfindungsgemäßen Systems zum optischen Detektieren und nachfolgendem Sortieren von mit einer Fördergeschwindigkeit bewegten Objekten;

Fig. 2 einen ersten Weg-Zeit-Verlauf einer zeitlichen Abfolge von Lichtpulsen und Bildaufnahmen durch einen optischen Flächensensor und den entsprechenden Wegverlauf des Objekts in Förderrichtung;

Fig. 3 einen zweiten Weg-Zeit-Verlauf einer zeitlichen Abfolge von Lichtpulsen und Bildaufnahmen durch einen optischen Flächensensor und den entsprechenden Wegverlauf des Objekts in Förderrichtung;

Fig. 4 den typischen Farbverlauf an Objektkanten bei der erfindungsgemäßen sequentiellen Ermittlung eines Gesamtbildes eines Objekts; und

Fig. 5 einen dritten Weg-Zeit-Verlauf einer zeitlichen Abfolge von Lichtpulsen und Bildaufnahmen durch einen optischen Flächensensor und den entsprechenden Wegverlauf des Objekts in Förderrichtung.

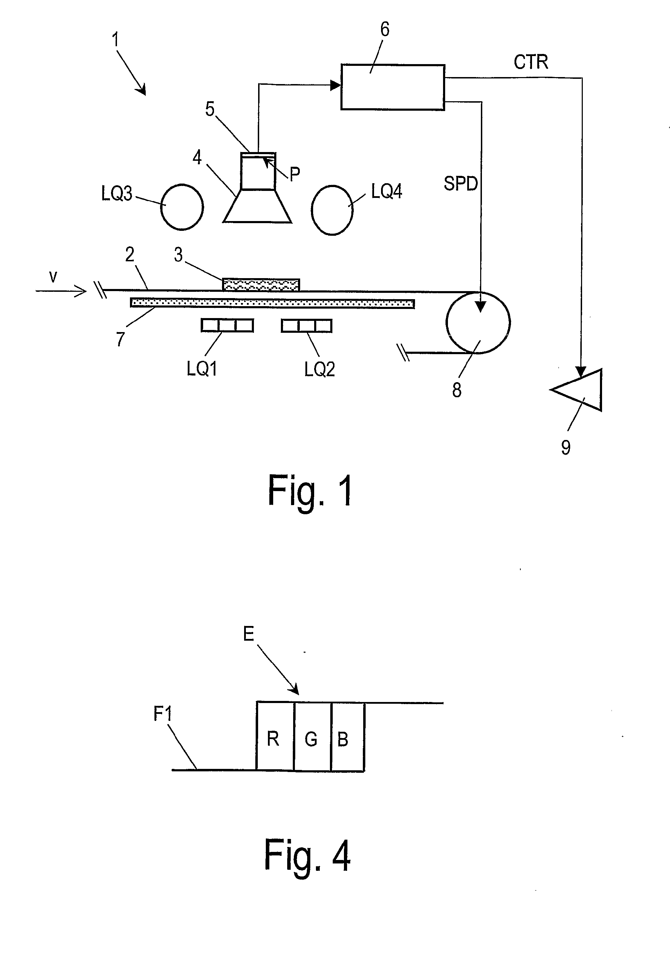

Unter Bezugnahme auf Fig. 1 wird nun eine beispielhafte Ausführungsform eines erfindungsgemäßen Systems 1 zum optischen Detektieren von mit einer Fördergeschwindigkeit v bewegten Objekten 3 näher erläutert. Das System 1 umfasst eine Fördereinrichtung 2 in Form eines Förderbands. Alternativ käme beispielsweise auch eine Förderrutsche in Betracht. Die Fördereinrichtung 2 wird von einer Antriebswalze 8 mit einer vorgegebenen Fördergeschwindigkeit v angetrieben. Auf der Fördereinrichtung 2 wird ein Objekt 3 befördert, das durch das System 1 detektiert werden soll. Bei dem Objekt handelt es sich beispielsweise um ein transparentes Glas- oder Kunststoffstück, das aus einem Materialstrom aussortiert werden soll. Alternativ dazu kann das Objekt 3 aber auch ein undurchsichtiges Teil, z.B. ein Stein, sein, der aus einem Materialstrom aus Glas aussortiert werden soll. Die Anwendungen für das erfindungsgemäße System 1 sind aber nicht auf die hier erläuterten Beispiele beschränkt. Oberhalb der Fördereinrichtung 2 befindet sich eine Kamera 4 mit einem monochromatischen (Schwarz/Weiß) Flächensensor 5 zur Erfassung von durch die Optik der Kamera 4 auf die Oberfläche des Flächensensors 5 gestrahlten Projektionen P des Objekts 3. Zweckmäßig ist die optische Achse der Kamera 4 im rechten Winkel auf die Fördereinrichtung 2 gerichtet. Es sei an dieser Stelle erwähnt, dass in der Praxis natürlich eine Vielzahl von Objekten 3 gleichzeitig detektiert wird, und dass zur feineren Unterscheidung meist eine Vielzahl von Kameras 4 quer zur Förderrichtung der Fördereinrichtung 2 angeordnet ist. Für die Zwecke der Erläuterung der Erfindung wird aber nur auf ein Objekt 3 und eine Kamera 4 Bezug genommen.

Zur Beleuchtung des Objekts 3 ist eine Vielzahl von Lichtquellen LQ1, LQ2, LQ3, LQ4 vorgesehen. Um zu zeigen, dass das erfindungsgemäße System 1 sowohl für Durchlichtverfahren als auch für Auflichtverfahren geeignet ist, sind beispielhaft für das Durchlichtverfahren zwei Lichtquellen LQ1, LQ2 unterhalb der Fördereinrichtung 2 und für das Auflichtverfahren zwei Lichtquellen LQ3, LQ4 oberhalb der Fördereinrichtung 2 angeordnet, d.h. auf derselben Seite der Fördereinrichtung 2 wie die Kamera 4. Für das Durchlichtverfahren ist es natürlich erforderlich, dass die Fördereinrichtung 2 transparent ist, z.B. ein Förderband aus transparentem Kunststoff aufweist. Eine Diffusorplatte 7 dient zur Vergleichmäßigung des von den Lichtquellen LQ1, LQ2 gelieferten Lichts. Alle Lichtquellen LQ1 - LQ4 weisen schnell schaltende, schmalbandige bis monochromatische Leuchtmittel auf und sind beispielsweise als Leuchtenprofile ausgebildet, die quer über die Fördereinrichtung 2 angeordnet sind. Im vorliegenden Ausführungsbeispiel sind die Lichtquellen LQ1, LQ2 als Module ausgebildet, die mehrere Reihen von LEDs mit unterschiedlichen Farben beinhalten, z.B. rote LEDs mit einer Wellenlänge von 630nm, grüne LEDs mit einer Wellenlänge von 530nm und blaue LEDs mit einer Wellenlänge von 460nm. Im Betrieb werden nur LEDs derselben Farbe gleichzeitig eingeschaltet, wie weiter unten ausführlich beschrieben werden wird. Die Lichtquelle LQ3 kann beispielsweise als UV-Lampe ausgeführt sein und die Lichtquelle LQ4 als Infrarot-Lampe.

Der monochromatische optische Flächensensor 5 ist als Array von Sensorpunkten ausgeführt, die in Zeilen und Spalten angeordnet sind (typischerweise 1024 x 1024 Pixel), wobei die Helligkeitssignale der Pixel zeilenweise auslesbar sind. In einer bevorzugten Ausführungsform ist der Flächensensor 5 als CMOS-Sensor ausgeführt. Die Helligkeitswerte des Flächensensors 5 werden zeilenweise von einem Rechner 6 ausgelesen, zwischengespeichert und gemäß dem nachfolgend beschriebenen erfindungsgemäßen Detektionsverfahren ausgewertet. Das Resultat der Auswertung ist einerseits ein Steuer-Ausgangssignal CTR, das zumindest eine nachfolgende Sortiereinrichtung 8 ansteuert, und andererseits ein Geschwindigkeitsregelsignal SPD, das die Geschwindigkeit der Antriebswalze 8 nachjustiert.

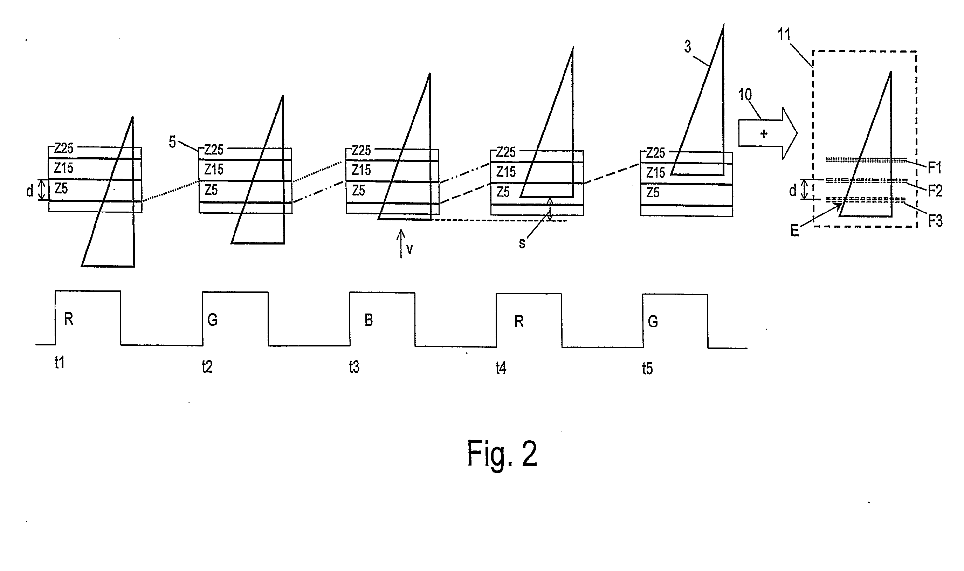

Als nächstes wird unter Bezugnahme auf Fig. 2 das im optischen Detektionssystem 1 abgearbeitete erfindungsgemäße Verfahren zum optischen Detektieren von Objekten 3 erklärt. Fig. 2 zeigt zu verschiedenen Zeitpunkten t1, t2, t3, t4, t5 Draufsichten des monochromatischen Flächensensors 5, bei dem zur Vereinfachung der Darstellung angenommen wird, dass er lediglich 30 Sensorzeilen aufweist. Fig. 2 zeigt weiters den Verlauf des Wegs des Objekts 3 in Förderrichtung (bzw. genau genommen dessen Projektion auf die Sensoroberfläche) zu den Zeitpunkten t1, t2, t3, t4, t5. Für die nachfolgende Erklärung genügt die vereinfachende Annahme, dass die Umrisse des echten Objekts 3 und seiner Projektion durch die Optik der Kamera 4 auf die Oberfläche des Sensors 5 in der Zeichnung zusammenfallen.

Gemäß der Erfindung wird das Objekt 3 zu den Zeitpunkten t1, t2, t3, t4, t5 mit einer Abfolge von jeweils einem Lichtpuls, die jeweils unterschiedlichen Farben aufweisen, beleuchtet. Es sei angenommen, dass zum Zeitpunkt t1 ein roter Lichtpuls R von den roten LEDs der Lichtquellen LQ1, LQ2, LQ3 und/oder LQ4 des in Fig. 1 dargestellten Systems im Auflicht- oder/und Durchlichtverfahren auf das Objekt 3 ausgestrahlt wird. Zum Zeitpunkt t2 wird ein grüner Lichtpuls G von den grünen LEDs der Lichtquellen LQ1, LQ2, LQ3 und/oder LQ4 auf das Objekt 3 ausgestrahlt, und zum Zeitpunkt t3 wird ein blauer Lichtpuls B von den blauen LEDs der Lichtquellen LQ1, LQ2, LQ3 und/oder LQ4 auf das Objekt 3 ausgestrahlt. Die Lichtpulse R, G, B sind in Fig. 2 als Rechtecksignale dargestellt. Die Abfolge der Lichtpulse R, G, B ist beliebig, wiederholt sich jedoch periodisch gleichbleibend. Die periodische Wiederholung der Lichtimpulse ist für die Zeitpunkte t4 und t5 dargestellt.

Zum Zeitpunkt t1, t2, t3, t4, t5 eines Lichtpulses wird vom Flächensensor 5 ein Bild des Objekts aufgenommen. Von diesem jeweiligen Bild werden aber nicht alle Zeilen vom Rechner 6 ausgelesen, sondern nur bestimmte und zwar zumindest so viele Zeilen eines jeden Bildes wie es unterschiedliche Farben der Lichtpulse gibt, in diesem Beispiel also drei Zeilen. Weiters müssen die ausgelesenen Zeilen einen Zeilenabstand d zueinander aufweisen, der jenem Abstand entspricht, um den die Projektion des Objekts 3 auf den Flächensensor 5 zwischen aufeinanderfolgenden Lichtpulsen weiterwandert. Dieser Zeilenabstand d ist proportional zu jener Strecke s, um die sich das reale Objekt 3 zwischen aufeinanderfolgenden Lichtpulsen mit der Fördergeschwindigkeit v in Förderrichtung fortbewegt. Es sei im Einklang mit praktischen Umsetzungen der Erfindung angenommen, dass der Zeitabstand zwischen den Zeitpunkten t1, t2, t3, t4, t5 zu denen die Lichtpulse R, G, B, R, G erfolgen, jeweils gleich sei und dass die Fördergeschwindigkeit v gleichförmig bzw. so langsam veränderlich ist, dass zwischen den einzelnen Lichtpulsen von gleichförmiger Fördergeschwindigkeit ausgegangen werden kann. Unter diesen Bedingungen ergibt sich, dass der Zeilenabstand konstant ist und im vorliegenden Ausführungsbeispiel mit 10 Zeilen angenommen wurde. Es werden also beispielsweise aus jedem Bild die Zeilen Z5, Z15 und Z25 ausgelesen und zwischengespeichert.

Anschließend werden im Rechner 6 mittels eines Additionsalgorithmus 10 die zwischengespeicherten Zeilen aus den bei den aufeinanderfolgenden Lichtpulsen R, G, B, R, G zu den Zeitpunkten t1, t2, t3, t4 und t5 bei Beleuchtung mit unterschiedlichen Farben aufgenommenen Bilder miteinander zu Farbzeilen F1, F2, F3 kombiniert, wobei berücksichtigt wird, dass sich zwischen den einzelnen Bildern die Projektion des Objekts 3 auf den Sensor 5 jeweils um den Zeilenabstand d weiterbewegt hat. Dementsprechend werden also die Zeile Z5 des bei rotem Licht zum Zeitpunkt t1 aufgenommenen Bildes mit der Zeile Z15 des bei grünem Licht zum Zeitpunkt t2 aufgenommenen Bildes und der Zeile Z25 des bei blauem Licht zum Zeitpunkt t3 aufgenommenen Bildes zur Farbzeile F1 kombiniert. Jede der Zeilen, Z5, Z15, Z25 kann als Farbkanal für eine andere Farbe angesehen werden, und die resultierende Farbzeile F1 enthält die Farbinformation eines RGB-Bildes. In analoger Weise werden die Zeile Z5 vom Zeitpunkt t2, die Zeile Z15 vom Zeitpunkt t3 und die Zeile 25 vom Zeitpunkt t4 miteinander zur Farbzeile F2 kombiniert. Ebenso werden die Zeile Z5 vom Zeitpunkt t3, die Zeile Z15 vom Zeitpunkt t4 und die Zeile Z25 vom Zeitpunkt t5 miteinander zur Farbzeile F3 kombiniert. Dieses Verfahren wird fortgesetzt, bis alle Farbzeilen ermittelt sind, die jeweils einen linearen Abschnitt des Objekts 3 quer zu seiner Förderrichtung darstellen. Die Farbzeilen werden zu einem Gesamtfarbbild 11 (hier RGB-Bild) zusammengesetzt, das in Bezug auf Sortierkriterien überprüft wird. Wenn das Gesamtfarbbild 11 die Sortierkriterien erfüllt, wird das Steuersignal CTR generiert. Es sei betont, dass gemäß dem erfindungsgemäßen Verfahren ein mehrfarbiges Bild erzeugt wird, obwohl alle ausgelesenen Zeilen nur monochromatische Helligkeitsinformation enthalten. Die Farbinformation lässt sich jedoch aufgrund der Beleuchtung mit unterschiedlichen Farben rekonstruieren. Es sei weiters erwähnt, dass die Farbzeilen F1, F2, F3 etc. des Gesamtfarbbildes 11 voneinander jeweils den Zeilenabstand d aufweisen. Für eine höhere Auflösung ist es erforderlich aus jedem Bild mehr Zeilen auszulesen und/oder die Zeitabstände zwischen den einzelnen Lichtpulsen zu verkürzen.

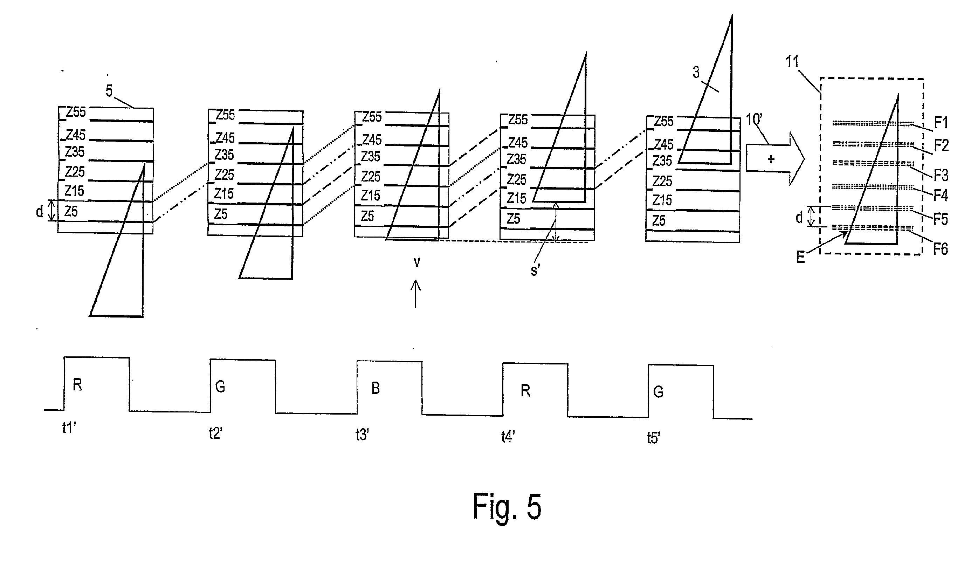

Unter Bezugnahme auf Fig. 5 wird nun gezeigt, wie mit dem erfindungsgemäßen Verfahren durch Auslesen von einer größeren Anzahl an Sensorzeilen, als verschiedene Lichtfarben verwendet werden, signifikante Vorteile erreicht werden können. In einem Anwendungsfall kann bei unveränderter Aufnahmefrequenz ein Vielfaches der Objektauflösung erreicht werden. Ein weiterer Anwendungsfall ermöglicht es bei unveränderter Objektauflösung mit einem Bruchteil der Aufnahmefrequenz das Auslangen zu finden und damit eine Vervielfachung der Blitzabstände und somit der Lichtenergie/Belichtung zu erreichen.

Die Darstellung von Fig. 5 entspricht jener von Fig. 2 mit dem Unterschied, dass die Zeitabfolge t1' - t5' die doppelte Zeitspanne der in der Abfolge t1 - t5 von Fig. 2 darstellten Zeitabfolge darstellt. Dies ist auch daran erkennbar, dass die Strecke s' um die sich das Objekt 3 zwischen aufeinanderfolgenden Lichtpulsen mit der Fördergeschwindigkeit v fortbewegt die doppelte Länge aufweist wie die Strecke s in Fig. 2, wie anhand der nachfolgenden Formeln dargestellt:

$$t2' - t1' = 2 \times (t2 - t1)$$

$$s' = 2 \times s$$

Weiters werden pro aufgenommenem Bild die doppelte Anzahl an Zeilen als es unterschiedliche Farben zur Beleuchtung gibt, d.h. sechs Zeilen ausgelesen. Es sind dies die Zeilen Z5, Z15, Z25, Z35, Z45, Z55, die jeweils einen Zeilenabstand d von 10 Zeilen aufweisen, der wie oben beschrieben ermittelt wurde. Es gilt die vereinfachende Annahme, dass der Detektor lediglich 60 Zeilen aufweist. Der zu Fig. 2 unterschiedlichen Aufnahmesituation muss durch einen angepassten Additionsalgorithmus 10' Rechnung getragen werden. Dadurch, dass pro Lichtfarbe doppelt so viele Sensorzeilen aufgenommen werden wie im ersten Beispiel, liefert auch der Additionsalgorithmus 10' für die selbe Anzahl von Lichtblitzen doppelt so viele Farbzeilen wie im obigen Beispiel. Durch den Additionsalgorithmus 10' werden nun die Zeile Z15 des bei rotem Licht zum Zeitpunkt t1' aufgenommenen Bildes mit der Zeile Z35 des bei grünem Licht zum Zeitpunkt t2' aufgenommenen Bildes und der Zeile Z55 des bei blauem Licht zum Zeitpunkt t3' aufgenommenen Bildes zur Farbzeile F1 kombiniert. In analoger Weise werden die Zeilen Z5 von t1', Z25 von t2' und Z45 von t3' zu F2 kombiniert, Z15 von t2', Z35 von t3' und Z55 von t4' zu F3 kombiniert, Z5 von t2', Z25 von t3' und Z45 von t4' zu F4 kombiniert, Z15 von t3', Z35 von t4' und Z55 von t5' zu F5 kombiniert und Z5 von t3', Z25 von t4' und Z45 von t5' zu F6 kombiniert. Die Farbzeilen F1, F2, F3, F4, F5, F6 etc werden zu einem Gesamt-Farbbild 11 zusammengesetzt.

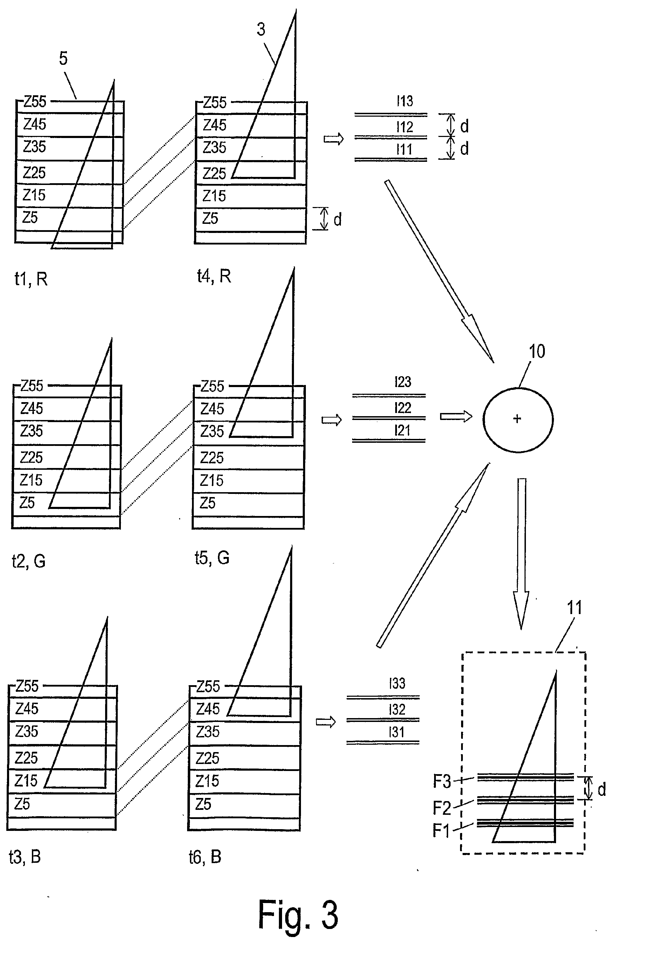

Anhand der Diagramme und Darstellungen von Fig. 3 wird nun gezeigt, wie mit dem erfindungsgemäßen Verfahren die zur Beleuchtung des Objekts 3 nötige Lichtstärke auf einen Bruchteil reduziert werden kann. Die Darstellung von Fig. 3 entspricht jener von Fig. 2 mit dem Unterschied, dass zwei Abfolgen (t1 - t3; t4 - t6) von Lichtpulsen mit unterschiedlichen Farben R, G, B dargestellt sind und dass pro aufgenommenem Bild die doppelte Anzahl an Zeilen als es unterschiedliche Farben zur Beleuchtung gibt, d.h. sechs Zeilen ausgelesen werden. Es sind dies die Zeilen Z5, Z15, Z25, Z35, Z45, Z55, die jeweils einen Zeilenabstand d von 10 Zeilen aufweisen, der wie oben beschrieben ermittelt wurde. Im Unterschied zum oben anhand der Fig. 2 beschriebenen Verfahren werden bei der erfindungsgemäßen Variante gemäß Fig. 3 zunächst jene Zeilen der beiden Lichtpuls-Abfolgen unter Berücksichtigung des Weiterwanderns der Projektion des Objekts 3 von Abfolge zu Abfolge miteinander addiert, die bei Beleuchtung mit Licht gleicher Farbe aufgenommen wurden. Aus Gründen der Minimierung des Rechenaufwands im Rechner 6 wurde die Pause zwischen den einzelnen Abfolgen auf dieselbe Länge festgelegt wie der Zeitabstand zwischen den einzelnen Lichtpulsen innerhalb einer Abfolge. Der Zeilenabstand zwischen zwei Abfolgen beträgt somit 30 Zeilen. Das heißt, dass folgende Zeilenadditionen vorgenommen werden:

Zeile Z5 vom Zeitpunkt t1 und Zeile Z35 vom Zeitpunkt t4 zu Zwischenzeile I11;
Zeile Z15 vom Zeitpunkt t1 und Zeile Z45 vom Zeitpunkt t4 zu Zwischenzeile I12;
Zeile Z25 vom Zeitpunkt t1 und Zeile Z55 vom Zeitpunkt t4 zu Zwischenzeile I13;
Zeile Z5 vom Zeitpunkt t2 und Zeile Z35 vom Zeitpunkt t5 zu Zwischenzeile I21;
Zeile Z15 vom Zeitpunkt t2 und Zeile Z45 vom Zeitpunkt t5 zu Zwischenzeile I22;
Zeile Z25 vom Zeitpunkt t2 und Zeile Z55 vom Zeitpunkt t5 zu Zwischenzeile I23;
Zeile Z5 vom Zeitpunkt t3 und Zeile Z35 vom Zeitpunkt t6 zu Zwischenzeile I31;
Zeile Z15 vom Zeitpunkt t3 und Zeile Z45 vom Zeitpunkt t6 zu Zwischenzeile I32;
Zeile Z25 vom Zeitpunkt t3 und Zeile Z55 vom Zeitpunkt t6 zu Zwischenzeile I33;

Die Zwischenzeilen I11, I12, I13 enthalten nur Helligkeitsinformation von bei Rot-Beleuchtung aufgenommenen Bildern.

Die Zwischenzeilen I21, I22, I23 enthalten nur Helligkeitsinformation von bei Grün-Beleuchtung aufgenommenen Bildern.

Die Zwischenzeilen I31, I32, I33 enthalten nur Helligkeitsinformation von bei Blau-Beleuchtung aufgenommenen Bildern.

In weiterer Folge werden die Zwischenzeilen unterschiedlicher Farbe unter Berücksichtigung des Zeilenabstands d gemäß dem Additionsalgorithmus 10 (analog wie in Fig. 2) zu Farbzeilen F1, F2, F3 etc. zusammengesetzt. Beispielsweise wird die Farbzeile F1 aus den Zwischenzeilen I11, I22, I33 zusammengesetzt. Für die Farbzeilen F2 und F3 werden die Zwischenzeilen I12 und I13 als Rot-Kanal verwendet, für den Grün-Kanal und Blau-Kanal müsste jedoch auf früher ermittelte oder zukünftige Zwischenzeilen zugegriffen werden, die aus Gründen der Übersichtlichkeit in Fig. 3 nicht dargestellt sind. Das Prinzip des Zusammensetzens geht jedoch aus Fig. 3 für jedermann verständlich hervor. Die Farbzeilen F1, F2, F3 etc werden zu einem Gesamt-Farbbild 11 zusammengesetzt.

Nachfolgend wird anhand von Fig. 2 und Fig. 4 erklärt, wie gemäß der Erfindung aus den Signalen der kombinierten Farbzeilen die Fördergeschwindigkeit des Objekts 3 bestimmt werden kann. Es ist nämlich charakteristisch für die Farbzeilen, dass in der Darstellung des Objekts 3 an dessen Rändern eine deutliche Abfolge der Beleuchtungsfarben R, G, B ersichtlich ist, wie in Fig. 4 für den Punkt E der Farbzeile F1 dargestellt ist. In Kombination ergibt die Abfolge der Beleuchtungsfarben R, G, B jedoch einen Grauwert ohne resultierenden Farbanteil. Sollte sich jedoch ein resultierender Farbanteil einstellen, so deutet das daraufhin, dass die zeitliche Abfolge an Lichtpulsen bzw. der Zeilenabstand d der ausgelesenen Zeilen nicht exakt mit der Fördergeschwindigkeit v des Objekts 3 übereinstimmt. Aus der resultierenden Farbe lässt sich weiters erkennen, ob die Fördergeschwindigkeit v zu niedrig oder zu hoch ist und auch, um wie viel die Fördergeschwindigkeit v vom Sollwert abweicht, der durch die Voreinstellung der Lichtpulsabfolge und des Zeilenabstands d genau bekannt ist. Somit kann eine Geschwindigkeitsmessung des Objekts 3 durchgeführt werden, die für Sortieranlagen sehr wichtig ist, weil z.B. daraus genau berechnet werden kann, wann das Objekt 3 an der Sortiereinrichtung 9 eintreffen wird. Weiters kann die erfindungsgemäße Messung der Ist-Fördergeschwindigkeit aus den Farbverläufen an den Objektkanten zur Nachregelung der Antriebsgeschwindigkeit der Antriebswalze 8 und damit zur Nachregelung der Fördergeschwindigkeit v des Objekts 3 verwendet werden. Eine weitere Anwendung der erfindungsgemäßen Messung der Ist-Fördergeschwindigkeit der Objekte besteht darin, den voreingestellten Zeilenabstand d der ausgelesenen Zeilen nachzujustieren, bis im Gesamtbild G des Objekts 3 kein resultierender Farbanteil an den Objektkanten mehr ersichtlich ist. Man erspart sich durch dieses selbstjustierende System 1 aufwändige Kalibrierungs- und Nachkalibrierungsarbeiten.

**Patentansprüche**

1. Verfahren zum optischen Detektieren von mit einer Fördergeschwindigkeit (v) bewegten Objekten (3), umfassend:

- das zeitlich aufeinanderfolgende Beleuchten des Objekts mit einer Abfolge von zumindest zwei Lichtpulsen, die unterschiedliche Farben aufweisen, **gekennzeichnet durch**
- das Aufnehmen von Bildern des Objekts (3) während eines jeden Lichtpulses mit einem monochromatischen optischen Flächensensor (5), z.B. CMOS-Sensor, der eine Vielzahl von Sensorzeilen aufweist,
- das Auslesen und Zwischenspeichern von zumindest so vielen Zeilen (Z5, Z15 .. Z55) eines jeden Bildes wie es unterschiedliche Farben der Lichtpulse gibt, wobei die ausgelesenen Zeilen einen Zeilenabstand (d) zueinander aufweisen, um den oder ein Vielfaches davon die Projektion (P) des Objekts (3) auf den Flächensensor (5) zwischen aufeinanderfolgenden Lichtpulsen (R, G, B) weiterwandert und der Zeilenabstand (d) bzw. dessen Vielfaches proportional zu jener Strecke (s, s') ist, um die sich das Objekt (3) zwischen aufeinanderfolgenden Lichtpulsen mit der Fördergeschwindigkeit (v) fortbewegt,
- das sequentielle Kombinieren von Zeilen (Z5, Z15 .. Z55) aus bei Beleuchtung mit unterschiedlichen Farben aufgenommenen Bildern zu Farbzeilen (F1 - F6), wobei die miteinander kombinierten Zeilen (Z5, Z15 .. Z55) beim Auslesen zueinander den genannten Zeilenabstand (d) bzw. dessen Vielfaches aufweisen, und das Zusammensetzen der Farbzeilen (F1 - F6) zu einem Farb-Gesamtbild (11).

2. Verfahren nach Anspruch 1, **dadurch gekennzeichnet, dass** die Abfolge der Lichtimpulse so eingestellt wird, dass die Projektion (P) des Objekts (3) zwischen zwei Lichtimpulsen um einen Zeilenabstand (d) zwischen den auszulesenden Zeilen (Z5, Z15, .. Z55) weiterwandert, wobei Zeilen (Z5, Z15 .. Z55) aus den bei aufeinanderfolgender Beleuchtung mit unterschiedlichen Farben aufgenommenen Bildern zu den Farbzeilen (F1, F2, F3) sequentiell miteinander kombiniert werden, wobei die derart kombinierten Zeilen (Z5, Z15 .. Z55) beim Auslesen zueinander den genannten Zeilenabstand (d) aufweisen.

3. Verfahren nach Anspruch 1 oder 2, **gekennzeichnet durch** das Auslesen und Zwischenspeichern eines Vielfachen, zumindest des Doppelten, an Zeilen (Z5, Z15 .. Z55) eines jeden Bildes wie es unterschiedliche Farben der Lichtpulse (R, G, B) gibt, und das sequentielle Kombinieren jener monochromatischen Zeilen (Z5, Z15 .. Z55) zu Zwischenzeilen (I11, I12, I13; I21, I22, I23; I31, I32, I33), die bei gleichfarbiger Beleuchtung in verschiedenen Abfolgen der Lichtpulse (R, G, B) aufgenommen wurden, unter Berücksichtigung des Abstandes zwischen den Lichtfolgen und des Zeilenabstandes (d) innerhalb der Abfolgen, sowie des anschließenden Kombinierens der Zwischenzeilen (I11, I12, I13; I21, I22, I23; I31, I32, I33), die unterschiedlichen Beleuchtungsfarben zugeordnet sind, unter Berücksichtigung des Zeilenabstandes (d) zu Farbzeilen (F1, F2, F3), und das Zusammensetzen der Farbzeilen (F1, F2, F3) zu einem Farb-Gesamtbild (11).

4. Verfahren nach Anspruch 1, **dadurch gekennzeichnet, dass** die Abfolge der Lichtimpulse so eingestellt wird, dass die Projektion (P) des Objekts (3) zwischen zwei Lichtimpulsen um ein ganzzahliges Vielfaches, zumindest das Doppelte, des Zeilenabstandes (d) zwischen den auszulesenden Zeilen (Z5, Z15, .. Z55) weiterwandert, wobei Zeilen (Z5, Z15 .. Z55) aus den bei Beleuchtung mit unterschiedlichen Farben aufgenommenen Bildern zu den Farbzeilen (F1 - F6) sequentiell miteinander kombiniert werden, wobei die miteinander kombinierten Zeilen (Z5, Z15 .. Z55) beim Auslesen zueinander das genannte Vielfache des Zeilenabstandes (d) aufweisen.

5. Verfahren nach einem der vorhergehenden Ansprüche, **dadurch gekennzeichnet, dass** zur Beleuchtung schnell schaltende, schmalbandige bis monochromatische Lichtquellen (LQ1, LQ2, LQ3, LQ4), vorzugsweise Leuchtdioden oder Laser, verwendet werden.

6. Verfahren nach einem der vorhergehenden Ansprüche, **dadurch gekennzeichnet, dass** das Objekt (3) auf einer transparenten Fördereinrichtung (4) bewegt wird und die Beleuchtung des Objekts durch die Fördereinrichtung hindurch erfolgt, wobei der optische Flächensensor (5) auf derselben Seite der Fördereinrichtung (4) wie das Objekt (3) positioniert ist.

7. Verfahren nach einem der vorhergehenden Ansprüche, **dadurch gekennzeichnet, dass** die Lichtquellen (LQ3, LQ4) zur Beleuchtung des Objekts (3) und der optische Flächensensor (5) auf derselben Seite der Fördereinrichtung (4) wie das Objekt (3) positioniert ist.

8. Verfahren nach einem der vorhergehenden Ansprüche, **dadurch gekennzeichnet, dass** aus Farbzeilen (F1, F2, F3) Abfolgen der Beleuchtungsfarben der Lichtpulse (R, G, B) an Kanten (E) des Objekts (3) ermittelt werden und die Abfolge der Beleuchtungsfarben miteinander kombiniert und ermittelt wird, ob das Kombinationssignal einen reinen Helligkeitswert ohne Farbanteil darstellt oder einen resultierenden Farbanteil aufweist, wobei die Farbe eines gegebenenfalls vorhandenen resultierenden Farbanteils ein Maß für die Abweichung der Ist-Geschwindigkeit des Objekts (3) von der Soll-Fördergeschwindigkeit (v) ist und daraus die Ist-Geschwindigkeit des Objekts (3) errechnet wird.

9. Verfahren nach Anspruch 8, **dadurch gekennzeichnet, dass** bei Erkennen von Abweichung der Ist-Geschwindigkeit des Objekts (3) von der Soll-Fördergeschwindigkeit (v) die Antriebsgeschwindigkeit der Antriebseinrichtung (8) der Fördereinrichtung nachgeregelt wird.

10. Verfahren nach Anspruch 8, **dadurch gekennzeichnet, dass** bei Erkennen von Abweichung der Ist-Geschwindigkeit des Objekts (3) von der Soll-Fördergeschwindigkeit (v) der Zeilenabstand (d) nachjustiert wird.

## Claims

1. A process for the optical detection of objects (3) moved at a conveying speed (v), comprising:

    - illuminating the object in a temporally consecutive manner with a sequence of at least two light pulses which exhibit different colours, **characterized by**
    - taking images of the object (3) during each light pulse with a monochromatic optical area sensor (5), e.g., a CMOS sensor, comprising a plurality of sensor lines,
    - reading out and temporarily storing at least as many lines (Z5, Z15 .. Z55) of each image as there are different colours of the light pulses, wherein the read-out lines have a line pitch (d) relative to each other by which or by a multiple of which line pitch the projection (P) of the object (3) onto the area sensor (5) moves along between consecutive light pulses (R, G, B) and the line pitch (d) or a multiple thereof, respectively, is proportional to the distance (s, s') for which the object (3) moves along at the conveying speed (v) between consecutive light pulses,
    - sequentially combining lines (Z5, Z15 .. Z55) from images taken under illumination in different colours to form colour lines (F1 - F6), with the lines (Z5, Z15 .. Z55) combined with each other having the aforesaid line pitch (d) or a multiple thereof, respectively, relative to each other when they are being read out; and
    - assembling the colour lines (F1 - F6) into an overall colour picture (11).

2. A process according to claim 1, **characterized in that** the sequence of light pulses is adjusted such that the projection (P) of the object (3) between two light pulses moves along by one line pitch (d) between the lines (Z5, Z15 .. Z55) to be read out, wherein lines (Z5, Z15 .. Z55) from the images taken under a consecutive illumination in different colours are combined sequentially to form the colour lines (F1, F2, F3), with the lines (Z5, Z15 .. Z55) combined in this way having the aforesaid line pitch (d) relative to each other when they are being read out.

3. A process according to claim 1 or 2, **characterized by** reading out and temporarily storing a multiple of, at least twice as many lines (Z5, Z15 .. Z55) of each image as there are different colours of the light pulses (R, G, B), and sequentially combining those monochromatic lines (Z5, Z15 .. Z55) which have been recorded under illumination with the same colour in different sequences of the light pulses (R, G, B) to form interlines (I11, I12, I13; I21, I22, I23; I31, I32, I33), in consideration of the distance between the light sequences and of the line pitch (d) within the sequences, as well as subsequently combining the interlines (I11, I12, I13; I21, I22, I23; I31, I32, I33) allocated to different illumination colours to form colour lines (F1, F2, F3), in consideration of the line pitch (d), and assembling the colour lines (F1, F2, F3) into an overall colour picture (11).

4. A process according to claim 1, **characterized in that** the sequence of the light pulses is adjusted such that the projection (P) of the object (3) between two light pulses moves along by an integral multiple of, at least twice, the line pitch (d) between the lines (Z5, Z15 .. Z55) to be read out, wherein lines (Z5, Z15 .. Z55) from the images taken under illumination in different colours are combined sequentially to form the colour lines (F1 - F6), with the lines (Z5, Z15 .. Z55) combined with each other having the aforesaid multiple of the line pitch (d) relative to each other when they are being read out.

5. A process according to any of the preceding claims, **characterized in that** fast-switching, narrowband to monochromatic light sources (LQ1, LQ2, LQ3, LQ4), preferably light emitting diodes or lasers, are used for the illumination.

6. A process according to any of the preceding claims, **characterized in that** the object (3) is moved on a transparent transport device (4) and the illumination of the object occurs through the transport device, with the optical area sensor (5) being positioned on the same side of the transport device (4) as is the object (3).

7. A process according to any of the preceding claims, **characterized in that** the light sources (LQ3, LQ4) for the illumination of the object (3) and the optical area sensor (5) are positioned on the same side of the transport device (4) as is the object (3).

8. A process according to any of the preceding claims, **characterized in that** sequences of the illumination colours of the light pulses (R, G, B) on edges (E) of the object (3) are determined from colour lines (F1, F2, F3) and the sequence of the illumination colours is combined and it is determined whether the combination signal constitutes a pure luminance value without a colour portion or exhibits a resulting colour portion, wherein the colour of a resulting colour portion, which optionally exists, is a measure of the deviation of the actual speed of the object (3) from the desired conveying speed (v) and the actual speed of the object (3) is calculated therefrom.

9. A process according to claim 8, **characterized in that** the drive speed of the driving device (8) of the transport device is readjusted upon detecting a deviation of the actual speed of the object (3) from the desired conveying speed (v).

10. A process according to claim 8, **characterized in that** the line pitch (d) is readjusted upon detecting a deviation of the actual speed of the object (3) from the desired conveying speed (v).

**Revendications**

1. Procédé de détection optique d'objets (3) en mouvement avec une vitesse de transfert (v), comprenant

> - l'illumination de l'objet à des intervalles de temps successifs avec une séquence d'au moins deux impulsions de lumière, qui présentent des couleurs différentes, **caractérisé par**
> - la prise d'images de l'objet (3) pendant chaque impulsion de lumière avec un capteur de surfaces optique (5) monochromatique, par exemple, un capteur CMOS, qui présente un grand nombre de lignes de capteur,
> - la lecture et le stockage intermédiaire d'au moins autant de lignes (L5, L15, ...L55) de chaque image qu'il y a de couleurs différentes dans les impulsions de lumière, où les lignes lues présentent entre elles un intervalle entre les lignes (d), dont la projection (P) de l'objet (3) sur le capteur de surfaces (5) entre des impulsions de lumière (R, J, B) se succédant les unes aux autres se déplace plus loin de l'équivalent d'un ou d'un multiple, et l'intervalle entre les lignes (d), respectivement, son multiple, est proportionnel à la distance (s, s') à laquelle se déplace l'objet (3) entre deux impulsions lumineuses successives avec la vitesse de déplacement (v),
> - la combinaison séquentielle de lignes (L5, L15....L55) d'images prises avec différentes couleurs sous forme de lignes de couleurs (C1 C6), où les lignes (L5, L15, ....L55) combinées les unes aux autres lors de la lecture présentent entre elles ledit intervalle entre les lignes (d), respectivement, son multiple, et

l'assemblage des lignes de couleurs (C1 - C6) pour former une image d'ensemble en couleurs (11).

**2.** Procédé selon la revendication 1, **caractérisé en ce que** la suite des impulsions lumineuses est réglée de telle manière que la projection (P) de l'objet (3) entre deux impulsions lumineuses se déplace une nouvelle fois d'une valeur équivalente à un intervalle entre les lignes (d) entre les lignes (L5, L15, ...L55) à lire, où les lignes (L5, L15, ...L55) sont combinées de manière séquentielle entre elles avec les images prises en différentes couleurs pour former des lignes de couleurs (C1, C2, C3), où les lignes (L5, L15, ...L55) ainsi combinées présentent entre elles ledit intervalle entre les lignes (d) lors de la lecture.

**3.** Procédé selon les revendications 1 ou 2, **caractérisé par** la lecture et le stockage intermédiaire d'un multiple, d'au moins le double, d'autant de lignes (L5, L15, ...L55) de chaque image qu'il y a de couleurs différentes (R, J, B) dans les impulsions lumineuses, et la combinaison séquentielle des lignes (L5, L15, ...L55) monochromatiques en lignes intermédiaires (I11, 112, 113 ; 121, 122, 123 ; 131, 132, I33), qui ont prises pendant diverses suites d'impulsions lumineuses (R, J, B) pour une illumination d'une même couleur, en tenant compte de l'intervalle entre les suites de lumières et de l'intervalles entre les lignes (d) au sein des suites, ainsi que la combinaison suivante des lignes intermédiaires (I11, I12, I13 ; I21, I22, I23 ; I31, I32, I33), qui sont associées aux différentes couleurs d'illumination, en tenant compte de l'intervalle entre les lignes (d) par rapport aux lignes de couleurs (C1, C2, C3), et l'assemblage des lignes de couleurs (C1, C2, C3) pour former une image d'ensemble en couleurs (11).

**4.** Procédé selon la revendication 1, **caractérisé en ce que** la suite des impulsions lumineuses est réglée de telle manière que la projection (P) de l'objet (3) se déplace plus loin entre deux impulsions lumineuses d'un multiple entier, au moins du double, de l'intervalle entre les lignes (d) entre les lignes (L5, L15, ...L55) à lire , où les lignes (L5, L15, ...L55) provenant des images prises pendant l'illumination avec différentes couleurs sont combinées entre elles de manière séquentielle pour donner les lignes de couleurs (C1 - C5), où les lignes (L5, L15, ...L55) combinées entre elles lors de la lecture présentent entre elles ledit multiple de l'intervalle entre les lignes (d).

**5.** Procédé selon l'une des revendications précédentes, **caractérisé en ce que**, pour l'illumination, des sources lumineuses (SL1, S12, SL3, SL4) commutant rapidement, d'une largeur de bande mince à monochromatique, de préférence, des diodes lumineuses ou laser, sont employées.

**6.** Procédé selon l'une des revendications précédentes, **caractérisé en ce que** l'objet (3) est déplacé sur un système de transfert (4) transparent et l'illumination de l'objet est effectuée à travers le système de transfert, où le capteur de surfaces optique (5) est positionné du même côté du système de transfert (4) que l'objet (3).

**7.** Procédé selon l'une des revendications précédentes, **caractérisé en ce que** les sources lumineuses (SL3, SL4) pour l'illumination de l'objet (3) et le capteur de surfaces optique (5) sont positionnés du même côté du système de transfert (4) que l'objet (3).

**8.** Procédé selon l'une des revendications précédentes, **caractérisé en ce que** les suites des couleurs d'illumination des impulsions lumineuses (R, J, B) sur les arêtes (A) de l'objet (3) sont déterminées à partir des lignes de couleurs (C1, C2, C3) et les suites des couleurs d'illumination sont combinées entre elles et sont déterminées, pour savoir si le signal de combinaison représente une valeur de luminosité pure sans composante de couleur ou présente une composante de couleur résultante, où la couleur est une mesure de la déviation de la vitesse réelle de l'objet (3) par rapport à la vitesse de transfert (v) souhaitée d'une composante de la couleur résultante éventuellement présente, et la vitesse réelle de l'objet (3) est calculée à partir de celle-ci.

**9.** Procédé selon la revendication 8, **caractérisé en ce que**, lors du constat d'une déviation de la vitesse réelle de l'objet (3) par rapport à la vitesse de transfert (v) souhaitée, la vitesse de l'entraînement du système d'entraînement (8) du système de transfert subit un nouveau réglage.

**10.** Procédé selon la revendication 8, **caractérisé en ce que**, lors du constat d'une déviation de la vitesse réelle de l'objet (3) par rapport à la vitesse de transfert (v) souhaitée, l'intervalle entre les lignes (d) subit un nouvel ajustage.

Fig. 1

Fig. 4

Fig. 2

EP 2 276 585 B1

Fig. 3

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 410847
- AT 503036 B1
- AT 004889 U1
- US 7019822 B1